# EUROPEAN PATENT SPECIFICATION

(11) **EP 2 241 228 B1**
(45) Date of publication and mention of the grant of the patent: **30.11.2011**
(21) Application number: 09425144.4
(22) Date of filing: 17.04.2009
(51) Int. Cl.: A47J 31/36

(54) **Brewing apparatus for automatic machines for producing brewed beverages**
Brühvorrichtung für Automaten zur Herstellung von Brühgetränken
Appareil d'infusion pour machines automatiques pour la production de boissons infusées

(43) Date of publication of application: 20.10.2010
(73) Proprietor: N&W Global Vending S.p.A., 24030 Valbrembo (Bergamo) (IT)
(72) Inventor: Magno, Alessandro, 24030 Bergamo (IT)
(74) Representative: Jorio, Paolo

(56) References cited:
- EP-A- 1 306 041
- EP-A- 1 336 365
- EP-A- 1 574 157
- WO-A-2009/007804
- DE-A1- 19 848 370

## Description

The present invention relates to a brewing apparatus for automatic machines for producing brewed beverages, in particular, espresso coffee machines.

More specifically, the present invention relates to a brewing apparatus of the type having a fixed axis, and comprising a fixed frame; a discharge doctor; a reversible drive; a number of mobile driven elements comprising an infusion chamber which oscillates about the fixed axis, under the doctor, through a loading position for loading material to be brewed, and between an infusion position and a discharge position on opposite sides of the loading position; a first piston movable along the infusion chamber to expel, in the discharge position, a cake of brewed material from the infusion chamber; and a second piston in the infusion position and movable to and from an engagement position engaging the infusion chamber to compress the material to be brewed inside the infusion chamber.

A brewing apparatus of this type is described in the Applicant's Patent Application WO/2009/007804 published on 15 January, 2009.

In known brewing apparatuses of the type described above, after receiving the second piston and brewing in the infusion position, the infusion chamber moves about the fixed axis into the discharge position, passing a first time under the doctor. In the discharge position, the first piston is activated to move from the bottom of the infusion chamber to an inlet of the infusion chamber, to support the cake of brewed material just outside the inlet. As the infusion chamber moves into the loading position, passing a second time under the doctor, the cake is intercepted by the doctor and detached from the end of the first piston, which moves back to the bottom of the infusion chamber before this reaches the loading position.

In known brewing apparatuses of the type described above, the two passes of the infusion chamber under the doctor may result in fouling of both sides of the doctor, and in the doctor depositing waste material inside the infusion chamber as this makes the second pass under the doctor.

It is an object of the present invention to provide a brewing apparatus of the type described above, designed to eliminate the above drawback.

According to the present invention, there is provided a brewing apparatus for automatic machines for producing brewed beverages, as claimed in Claim 1 and preferably in any one of the following Claims depending directly or indirectly on Claim 1.

A non-limiting embodiment of the present invention will be described by way of example with reference to the accompanying drawings, in which:
Figure 1 shows an exploded rear view in perspective of a preferred embodiment of the brewing apparatus according to the present invention;
Figure 2 shows an inside view in perspective of a first detail in Figure 1;
Figure 3 shows an inside view in perspective of a second detail in Figure 1;
Figures 4 to 9 show partly sectioned side views, with parts removed for clarity, of the Figure 1 apparatus in respective different operating configurations;
Figures 10 and 11 show larger-scale views of respective details in Figure 4.

In the brief description of the drawings above, and in the following description of the preferred embodiment of the brewing apparatus according to the present invention, the terms "front" and "rear" are used merely to simplify the description, in that the brewing apparatus may be oriented any way.

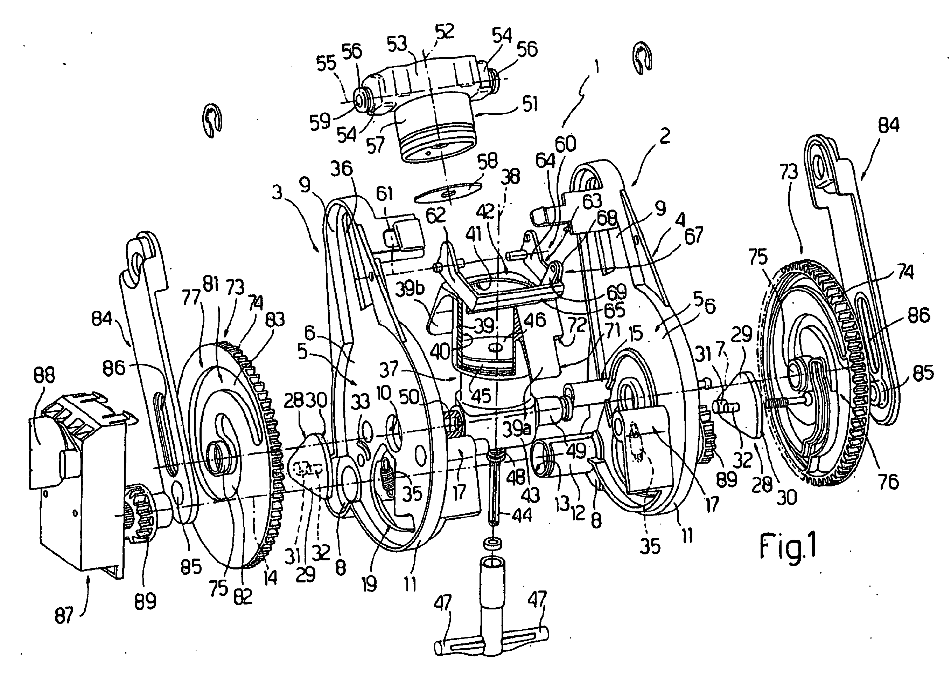

Number 1 in Figure 1 indicates as a whole a brewing apparatus forming part of an automatic machine for producing brewed beverages. Brewing apparatus 1 is an improved version of the one described in WO/2009/007804, the description of which is referred to fully herein for the sake of clarity, and comprises a frame 2 defined by two facing, specularly shaped shoulders 3 and 4. Consequently, in the following description, only one of shoulders 3, 4 is described where possible.

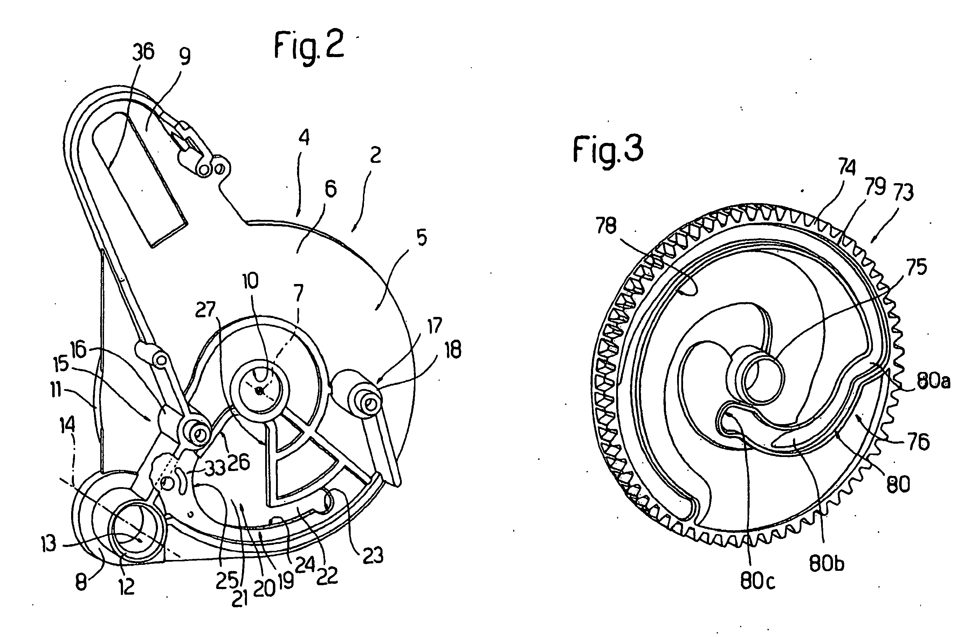

As shown in Figure 2, which illustrates shoulder 4, each shoulder 3, 4 comprises a plate 5, in turn comprising a circular portion 6 having an axis 7, a circular bottom radial appendix 8 at the front, and an elongated top radial appendix 9. Plate 5 has a through hole 10 coaxial with axis 7; an outer surface with a raised rib 11 extending along the whole length of its periphery; and an inner surface facing the other plate 5, and from which a tubular spacer 12 projects perpendicularly to plate 5 and is connected to the free end of the other tubular spacer 12 to form a conduit 13 that comes out on the outside and is coaxial with an axis 14 (Figure 1) parallel to axis 7 and coaxial with appendixes 8. From the inner surface of plate 5 project a front spacer 15 integral with tubular spacer 12 and comprising two plates perpendicular to and integral with plate 5 and projecting radially from a central tubular body 16 parallel to axis 7 and connected to the other tubular body 16 by an axial pin; and a rear spacer 17 located on the opposite side of hole 10 to spacer 15, and comprising a tubular body 18, which is parallel to axis 7, is connected to the other tubular body 18 by an axial pin, and has a radial plate perpendicular to and integral with plate 5.

As shown more clearly in Figure 2, shoulders 3 and 4 incorporate a control device 19, which is a fixed cam device defined, on each plate 5, by an L-shaped window 20, a top arm 21 of which, extending radially with respect to axis 7, is located between spacers 15 and 17 and is substantially trapezium-shaped, and a bottom arm 22 of which extends rearwards from top arm 21 and is in the form of a curved slot extending about axis 7 and terminating with a radial recess 23 at the closed rear end opposite the end communicating with top arm 21. In other words, window 20 has a radially outer periphery defined by a substantially arc-shaped edge 24, which is coaxial with axis 7, extends from recess 23 along bottom arm 22 and along the bottom edge of top arm 21, and is connected by a curved edge 25 to a front radial edge 26 of top arm 21. By means of a further curved edge close to and about relative hole 10 and at the top of top arm 21, edge 26 is connected to a further radial edge 27, which defines the rear of top arm 21 and is bounded at its radially outer end by bottom arm 22.

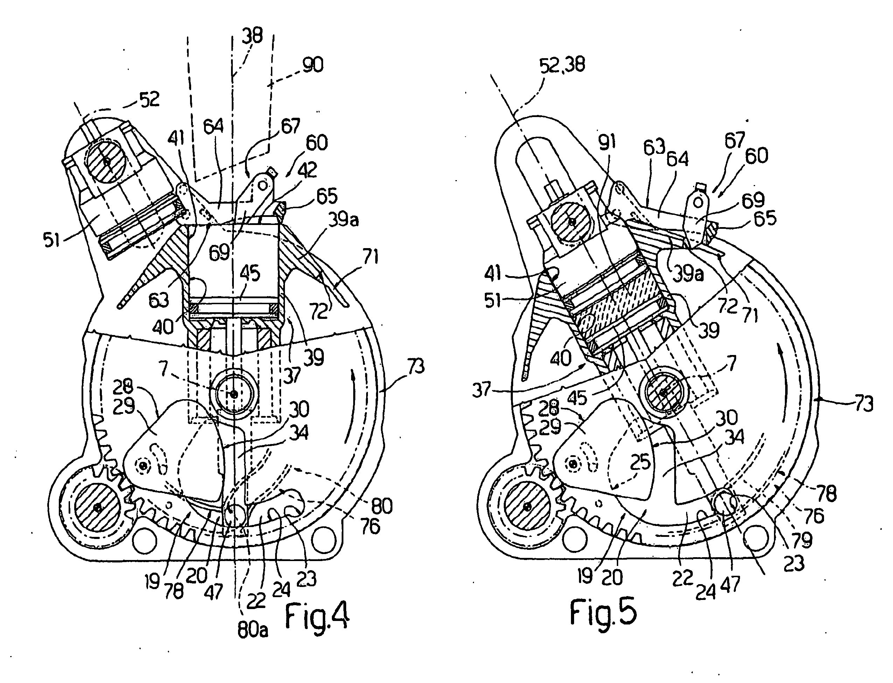

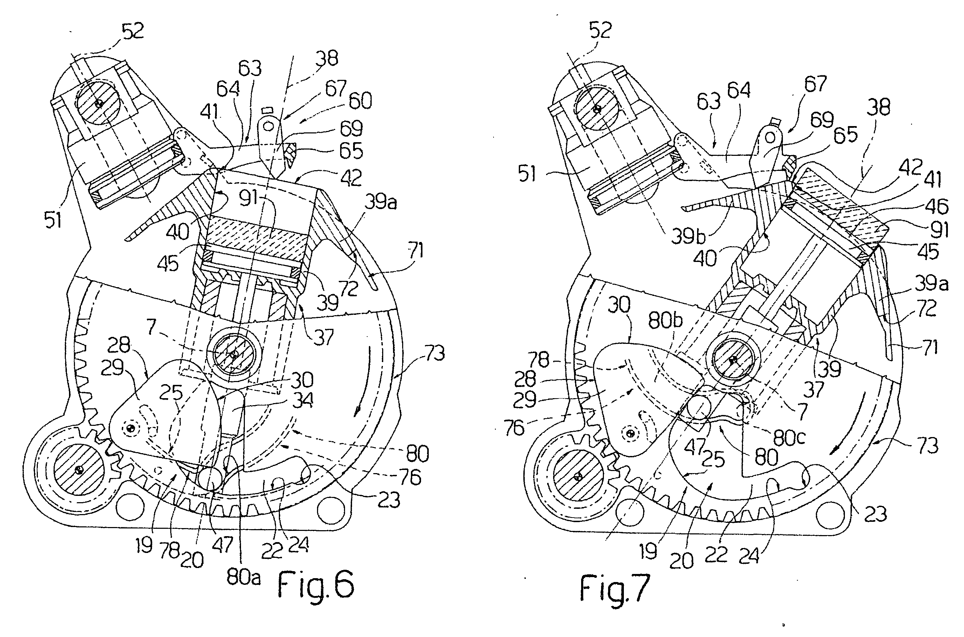

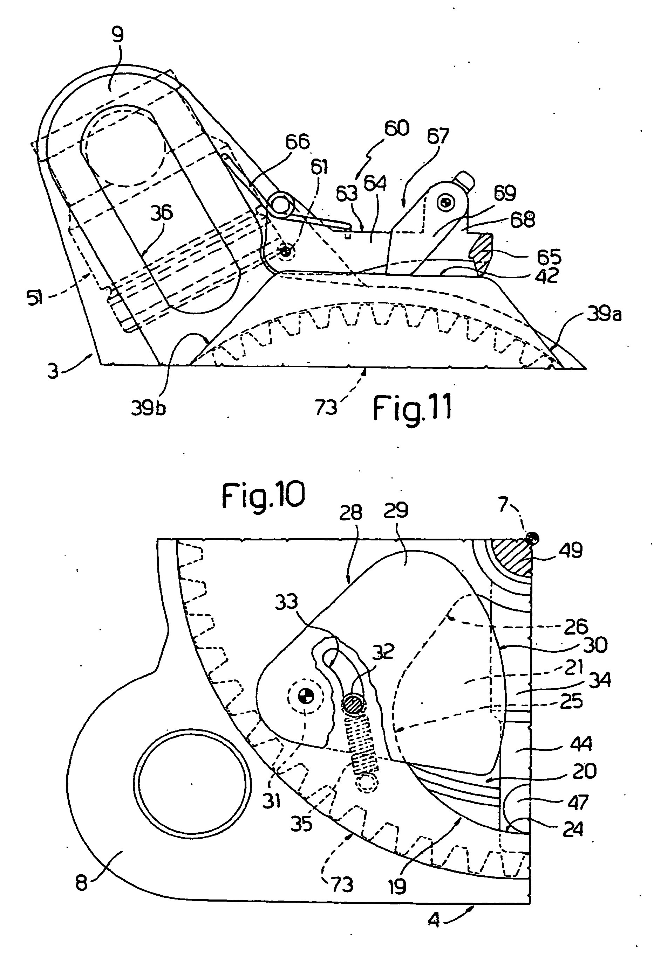

As shown in Figure 1 and particularly in Figure 10, control device 19 comprises, for each of shoulders 3 and 4, a guide member 28 comprising a sector-shaped plate 29, which is positioned contacting the outer surface of relative shoulder 3, 4, with its vertex facing and adjacent to bottom radial appendix 8, and with its circular edge 30 facing axis 7. Plate 29 is fitted in oscillating manner to relative shoulder 3, 4 by a pin 31 parallel to axis 7 and adjacent to the vertex of plate 29, and has, on the side facing relative shoulder 3, 4, an appendix 32 that slides transversely inside a slot 33. Slot 33 is formed through relative shoulder 3, 4, extends about the axis of pin 31, and limits oscillation of plate 29 between a lowered position (Figures 4-6 and 9), in which plate 29 partly covers top arm 21 of window 20 to define, between its own circular edge 30 and the relative front radial edge 27, a substantially radial track 34 connected at the bottom to bottom arm 22, and a raised position (Figure 7), in which plate 29 clears relative top arm 21 completely. In the lowered position (Figure 4), plate 29 is positioned with its bottom edge a given distance from edge 24 of window 20.

Appendix 32 projects inside relative shoulder 3, 4, and is fitted on its free end with a spring 35 for holding plate 29 normally in the lowered position.

Finally, each plate 5 ha a radial slot 36 (with respect to axis 7) extending along relative top radial appendix 9.

As shown in Figure 1, when fitted together by spacers 12, 15 and 17, shoulders 3 and 4 define a space in between, in which is mounted an elongated infusion body 37 having a longitudinal axis 38 perpendicular to axis 7, and comprising a top portion defined by a cylindrical cup-shaped body 39, which comprises a sloping rear tab 39a, described in detail below, and a front tab 39b. Cup-shaped body 39 is coaxial with axis 38, internally defines an infusion chamber 40 communicating with the outside through a top loading-discharge opening 41 formed through a top surface 42, and is closed at the bottom by a bottom wall. Infusion body 37 also comprises a bottom portion defined by a tubular body 43 coaxial with cup-shaped body 39 and extending downwards from said bottom wall. The rod 44 of a so-called extraction piston 45 slides inside tubular body 43 and through an axial through hole (not shown) formed in said bottom wall, which piston 45 is defined by a plate mounted to slide axially inside infusion chamber 40 and fitted with a filter 46. The bottom end of rod 44, opposite the end connected to piston 45, is fitted with a T-shaped member having, on its bottom end, two diametrically opposite radial arms, each of which defines a cam follower 47 and engages relative window 20 of control device 19. Piston 45 is normally maintained in a lowered rest position (Figure 1), contacting the bottom wall of cup-shaped body 39, by a spring 48 fitted to rod 44 and retained between said bottom wall and said T-shaped member.

Two diametrically opposite tubular pins 49 project radially from tubular body 43, are each parallel to a relative cam follower 47, and each engage a relative hole 10 in rotary manner to support infusion body 37 on frame 2 and to allow infusion body 37 to oscillate about axis 7 with respect to frame 2. One of tubular pins 49 is closed, while the other defines a brewing water inlet fitting and communicates with the inside of infusion chamber 40 via a conduit 50 extending inside tubular body 43 and through the bottom wall of cup-shaped body 39.

The space between shoulders 3 and 4 also houses a further so-called compression piston 51 having a longitudinal axis 52 and comprising an annular connecting head 53 coaxial with axis 52 and in turn comprising two diametrically opposite radial appendixes 54, which are coaxial with each other and with an axis 55 parallel to axis 7, and each engage relative slot 36 in transversely sliding, angularly fixed manner. Each radial appendix 54 has, on its free end, a pin 56 coaxial with axis 55 and for the purpose explained below. Piston 51 also comprises a cylindrical body 57, which projects downwards from annular connecting head 53, and is movable, in use, along axis 52, between a lowered position, in which cylindrical body 57 engages cup-shaped body 39 in sliding and fluidtight manner to close infusion chamber 40, and a raised position, in which cylindrical body 57 is fully extracted from, and a given height above, infusion chamber 40. At its end facing cup-shaped body 39, cylindrical body 57 has a chamber closed at the bottom by a filter 58 and communicating with the outside via a conduit 59, which extends along cylindrical body 57 and through one of radial appendixes 54 and relative pin 56 to permit outflow of a beverage from infusion chamber 40.

The space between shoulders 3 and 4 also houses a passive doctor device 60 for discharging waste material expelled from infusion chamber 40 by piston 45.

As shown in Figure 1 and particularly in Figure 11, doctor device 60 is U-shaped, is hinged to and to the rear of top radial appendixes 9 of shoulders 3 and 4 to oscillate about an axis 61 parallel to axis 7, and comprises two parallel lateral members defined by an arm 62 (Figure 1) and a rocker arm 63. A first arm 64 of rocker arm 63 supports, together with arm 62, a doctor 65 parallel to axis 7 and located along the path travelled by top surface 42 of cup-shaped body 39 as it oscillates about axis 7; and a second arm of rocker arm 63 is connected by a spring 66 to the adjacent shoulder 4 to normally slide doctor 65 on top surface 42 and tab 39a.

Doctor device 60 also comprises a follower device 67 carried by arm 64, close to doctor 65, and which cooperates with top surface 42 of cup-shaped body 39 and the top surface of tab 39a. Follower device 67 alternatively assumes a work configuration, in which follower device 67 allows doctor 65 to slide on top surface 42 and tab 39a, and an armed rest configuration, in which follower device 67 keeps doctor 65 raised with respect to top surface 42 and tab 39a.

Follower device 67 comprises an appendix 68 extending upwards from arm 64; and a follower lever 69, which is hinged to the top end of appendix 68 to rotate, with respect to appendix 68, about a movable axis movable with doctor 65 and parallel to axis 7, extends downwards inside and below arm 64, and is normally maintained, by contact with top surface 42, in a raised position (Figures 4, 7-9 and 11), in which follower lever 69 slopes rearwards with respect to doctor 65, and has a free end above the level of a bottom edge of doctor 65. If rotated towards doctor 65, follower lever 69 is arrested laterally contacting doctor 65 in a lowered position (Figures 5 and 6), in which its free end projects downwards and towards axis 7 with respect to doctor 65.

As shown more clearly in Figures 4 to 9, as doctor 65 moves along top surface 42 of cup-shaped body 39 and along tab 39a, the bottom end of follower lever 69 moves along a straight path extending along a lateral edge of top surface 42 and a lateral edge of tab 39a, both facing the adjacent shoulder 4. As explained more clearly below, to move follower lever 69 from the normal raised position to the lowered position, tab 39a has, starting from its free end and along part of its lateral edge facing shoulder 4, a slot 71 located along the path travelled by the free end of follower lever 69, and terminating with a transverse shoulder 72 at the end facing top surface 42.

Rib 11 on each shoulder 3, 4 defines, about circular portion 6 of relative plate 5, a housing for an oscillating control unit comprising a disk 73, which is coaxial with axis 7 and has external teeth 74, and a tubular central hub 75 which engages respective hole 10 and the two tubular pins 49 in rotary manner. Disk 73 has an inner surface (Figure 3) designed to define a movable cam control device 76 for controlling oscillation of infusion body 37 about axis 7, and for also controlling, together with control device 19, the position of piston 45 along infusion chamber 40, as piston 45 moves towards opening 41. Disk 73 also has an outer surface (Figure 1) designed to define a movable cam control device 77 for controlling the axial movements of piston 51.

As shown in Figure 3, movable cam control device 76 is defined on each disk 73 by a track 78 formed on the inner surface of disk 73 and engaged by relative cam follower 47 (Figure 1) through relative window 20. Track 78 comprises a circumferential branch 79 extending about axis 7 and along the periphery of the inner surface of disk 73; and a substantially radial branch 80 with the same constant section as branch 79. Branch 80 comprises a radial portion 80a connected to one end of branch 79; a curved intermediate portion 80b; and an end portion defining a recess 80c located close to hub 75 and for receiving and retaining relative cam follower 47.

As shown in Figure 1, control device 77 is defined on each disk 73 by a track 81 formed on the outer surface of disk 73, extending about axis 7, and comprising a circumferential branch 82 extending about axis 7; and a spiral branch 83, a radially inner end of which is connected to one end of branch 82.

As shown in Figure 1, on each disk 73, control device 77 is connected to piston 51 by a radial rod 84, which is hinged at the top end to relative pin 56, is fitted, close to its bottom end, with a cam follower 85 engaging relative track 81, and has an axial slot 86 engaged in transversely sliding manner by relative hub 75 and relative tubular pin 49.

Brewing apparatus 1 also comprises a drive 87. In the example shown, drive 87 comprises a reversible motor 88, the output shaft of which is connected angularly to a pinion 89, which is coaxial with axis 14, is housed inside a housing formed by rib 11 on relative bottom radial appendix 8, meshes with relative teeth 74, and is integral, via conduit 13, with a like pinion 89 on the other plate 5.

Operation of brewing apparatus 1 will now be described with reference to Figures 4 to 9, and as of the operating position shown in Figure 4, which is a loading position, in which axis 38 is substantially vertical, and opening 41 of cup-shaped body 39 is located between arms 62 (Figure 1) and 64 of doctor device 60 and directly beneath a loading hopper 90, piston 45 is in the lowered rest position contacting the bottom wall of infusion chamber 40, and piston 51 is in a raised rest position.

When brewing apparatus 1 is in this loading position (Figure 4), plate 29 of each guide member 28 is in the lowered position, and each cam follower 47 is maintained by spring 48 (Figure 1) just beneath the bottom end of relative track 34 and contacting an intermediate point of bottom branch 22 of relative window 20 of control device 19, and partly engages portion 80a of branch 80 of relative track 78 of control device 76. At the same time, each cam follower 85 (Figure 1) is located (in a manner not shown) along relative track 81 of control device 77, just upstream from the junction between circumferential branch 82 and spiral branch 83.

When brewing apparatus 1 is in the loading position, follower device 67 is in the work configuration, so as to keep doctor 65 in contact with top surface 42 of cup-shaped body 39, at the join between top surface 42 and the top surface of tab 39a.

Once the material for brewing is loaded into infusion chamber 40, motor 88 (Figure 1) is activated to rotate disks 73 anticlockwise in Figures 4 and 5. Since each cam follower 47 (Figure 4) partly engages portion 80a of branch 80 of relative track 78, disks 73 rotate cam followers 47, thus rotating infusion body 37 anticlockwise to align axis 38 with axis 52. In this, infusion, position (Figure 5), opening 41 of infusion chamber 40 is aligned facing piston 51.

This rotation brings each cam follower 85 (Figure 1) (in a manner not shown) up to the junction between circumferential branch 82 and spiral branch 83, thus keeping piston 51 stationary in the raised position, while each cam follower 47 moves along relative edge 24 of control device 19 to engage relative recess 23 (Figure 5).

Since the radius of the outer edge of circumferential branch 79 of track 78 is slightly greater than the radius of edge 24 and equal to the distance between the bottom of recess 23 and axis 7, the radial movement of cam follower 47 to engage recess 23 releases cam follower 47 from portion 80a of branch 80 of relative track 78 of control device 76.

The rotation described above has no effect on the position of plate 29 of guide member 28, whereas follower lever 69 is moved along tab 39a to engage slot 71.

At this point, further anticlockwise rotation of disks 73 produces no oscillation of infusion body 37 and no movement of piston 45, on account of cam followers 47 remaining fixed inside relative recesses 23, and simply moves disks 73 (Figure 5) with respect to cam followers 47, each of which moves along circumferential branch 79 of relative track 78 of control device 76 towards the closed end of circumferential branch 79. At the same time (in a manner not shown), each cam follower 85 (Figure 1) moves along spiral branch 83 of relative track 81 of control device 77, thus moving relative rod 84 radially downwards and so moving piston 51 downwards along axis 52. As a result, piston 51 engages infusion chamber 40 in fluidtight manner, and compresses the material for brewing inside the infusion chamber to form a cake 91 on filter 46.

With motor 88 off, hot water is fed along conduit 50 (Figure 1) into infusion chamber 40 and through cake 91 to produce a brewed beverage, which flows out along conduit 59 (Figure 1).

At this point, the hot water supply is cut off, and motor 88 is started again to rotate disks 73 clockwise.

Over a first part of this clockwise rotation (Figure 6), cam followers 85 (Figure 1) move backwards along relative spiral branches 83 (in a manner not shown) to withdraw piston 51 completely from infusion chamber 40, and, at the same time, cam followers 47, stationary inside relative recesses 23, move along the whole of relative circumferential branches 79 up to relative portions 80a to restore brewing apparatus 1 to the Figure 4 configuration.

Over a second part of said clockwise rotation, cam followers 85 (Figure 1) move (in a manner not shown) along circumferential branch 82 of track 81, thus keeping piston 51 in the raised position, while cam followers 47, engaging relative portions 80a, are released from relative recesses 23 and, still engaging relative portions 80a, move along edge 24 (Figure 6) up to curved edge 25 of window 20 of control device 19, and are engaged beneath relative plates 29.

This movement of cam followers 47 rotates infusion body 37 clockwise about axis 7, so cup-shaped body 39 moves back into the Figure 4 loading position, and continues moving past doctor 65 (Figure 7).

During this movement, follower lever 69 comes into contact with shoulder 72 (Figures 5, 6) of slot 71, and so moves into the armed rest position (Figure 6) contacting doctor 65. This configuration, which corresponds to a raised position of doctor 65 with respect to top surface 42, is maintained for as long as follower lever 69 slides on top surface 42.

In other words, as infusion body 37 passes beneath doctor 65, doctor 65 is in no way affected by any impurities on top surface 42. Once the infusion body passes the doctor (Figure 7), follower lever 69 moves onto tab 39b, thus losing contact with top surface 42 and allowing doctor 65 to return to the work configuration contacting top surface 42.

At this point, control device 19 and control device 76 cooperate with each other to control the position of piston 45 along infusion chamber 40.

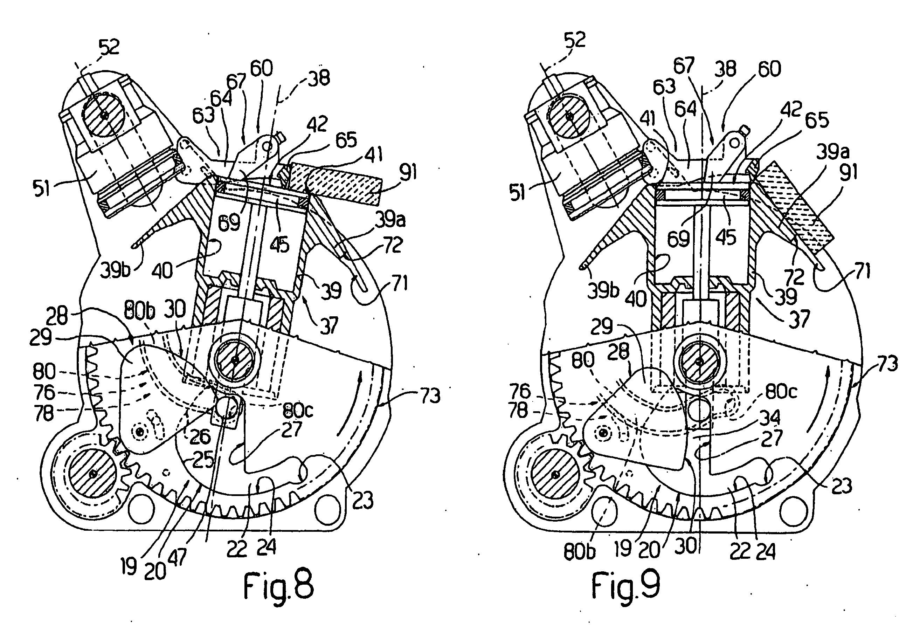

That is, over a third part of said clockwise rotation, cam followers 85 (Figure 1) continue moving along circumferential branch 82 of track 81 (in a manner not shown), thus keeping piston 51 in the raised position, while cam followers 47, pushed by disks 73 along curved edges 25 of relative windows 20, move relative plates 29 into the raised position, are released from relative portions 80a, and move (Figure 7) towards axis 7 along relative portions 80b up to relative recesses 80c (Figure 8), thus arresting clockwise rotation of disks 73. This movement brings piston 45 into a fully raised position (Figure 7), in which filter 46 is on a level with opening 41, thus moving cake 91 out of infusion chamber 40 and into a position facing doctor 65.

Upon piston 45 reaching the fully raised position (Figure 8), cam followers 47, engaging relative recesses 80c, are arrested against the rear radial edge 26 of window 20, and cam followers 85 (Figure 1) reach the closed ends of relative circumferential branches 82 (in a manner not shown), thus stopping and subsequently inverting motor 88.

When motor 88 once more rotates disks 73 anticlockwise, cam followers 47, still engaging relative recesses 80c (Figure 8), move with disks 73, thus keeping piston 45 fully raised, and moving cup-shaped body 39 beneath doctor 65 into the loading position (Figures 8, 9). Follower lever 69 by now being in the work configuration, doctor 65 slides along top surface 42 to remove cake 91, which is moved onto tab 39a and drops into a container (not shown) at the rear of brewing apparatus 1.

During this movement, cam followers 47, still engaging relative recesses 80c, release relative plates 29, which are restored to the lowered position (Figure 9) to redefine relative tracks 34, which are immediately engaged by cam followers 47 which tend to move towards front radial edge 27 of window 20. On contacting the front radial edges 27 of relative windows 20, cam followers 47 are released from relative recesses 80c, and are moved (Figure 9) by spring 48 (Figure 1) along relative tracks 34 to engage portion 80a on one side, and bottom branch 22 of window 20 on the other. This latter position corresponds to restoring brewing apparatus 1 to the loading position.

In connection with the above, it should be pointed out that, without guide members 28, infusion body 37 would tend to oscillate beneath doctor 65, in the lowered position contacting top surface 42, as piston 45 moves back into the lowered position. Such oscillation, which could result in waste material adhering to both the surfaces of doctor 65, thus eliminating the advantages of follower device 67, is prevented by guide members 28, which guide cam followers 47 along tracks 34, while keeping infusion body 37 angularly fixed with respect to axis 7 and in the loading position, throughout the return movement of piston 45 into the lowered position.

## Claims

1. A brewing apparatus for automatic machines for producing brewed beverages; the brewing apparatus (1) having a fixed axis (7) and comprising a fixed frame (2); a reversible drive (87); a number of mobile driven elements comprising an infusion body (37) defining an infusion chamber (40) and adapted to oscillate about the fixed axis (7) through a loading position for a material to be brewed and between an infusion position and a discharge position arranged on opposite sides of the loading position; an extraction piston (45) reciprocating along the infusion chamber (40) to expel, in the discharge position, a cake (91) of brewed material from the infusion chamber (40) through an end surface (42) of the infusion body (37); and doctor means (60) mounted on the frame (2) in a position facing the end surface (42) to discharge the expelled cake (91); the brewing apparatus (1) being **characterized in that** the doctor means (60) comprise a discharge doctor (65) arranged between the loading and the discharge positions, and follower means (67) arranged between the discharge doctor (65) and the end surface (42) of the infusion body (37) and operable to become arranged, starting from a normal raised position in which the follower means (67) allow the discharge doctor (65) to maintain itself in contact with the end surface (42) of the infusion body (37), in a lowered position to maintain the discharge doctor (65) at a distance from said end surface (42).

2. A brewing apparatus as claimed in Claim 1, and further comprising a compression piston (51) arranged in the infusion position and movable to and from an engagement position with the infusion chamber (40) to compress the material to be brewed within the infusion chamber (40).

3. A brewing apparatus as claimed in Claim 1 or 2, wherein the doctor means (60) comprise a first and a second arm (62, 64), which are rigidly connected to respective ends of the discharge doctor (65), extend from the discharge doctor (65) towards the infusion position and are mounted on the frame (2) to oscillate, in a relation to the frame (2), about a second axis (61) which is parallel to both the discharge doctor (65) and a first axis coinciding with the fixed axis (7); the follower means (67) being carried by the second arm (64).

4. A brewing apparatus as claimed in anyone of the foregoing Claims, wherein the follower means (67) comprise a lever (69) mounted for oscillating, in relation to the discharge doctor (65), about an oscillation axis movable with the discharge doctor (65) and parallel to the fixed axis (7), from a normal raised position, in which a free end of the lever (69) is positioned at a higher level than that of the discharge doctor (65), to a lowered position, in which said free end protrudes, in relation to the discharge doctor (65), towards the fixed axis (7).

5. A brewing apparatus as claimed in anyone of the foregoing Claims, and comprising trigger means (71, 72) adapted to cooperate with the follower means (67) to move the follower means (67) to the lowered position when the infusion body (37) moves, in use, from the infusion position to the discharge position through the loading position.

6. A brewing apparatus as claimed in Claim 5, wherein the trigger means (71, 72) are carried by the infusion body (37).

7. A brewing apparatus as claimed in Claim 5 or 6, wherein the infusion body (37) has a tab (39a) extending towards the discharge position, radiused to the end surface (42) and movable under the doctor means (60); the trigger means (71, 72) being provided on said tab (39a).

8. A brewing apparatus as claimed in Claim 6 or 7, wherein the trigger means (71, 72) comprise a shoulder (72) provided on said tab (39a) parallel to the fixed axis (7) for hooking the follower means (67) when the follower means (67) move, in use, along the tab (39a) and towards the end surface (42) of the infusion body (37).

9. A brewing apparatus as claimed in anyone of the foregoing Claims, and comprising guide means (28) adapted to cooperate with the infusion body (37) to maintain the infusion body (37) fixed in the loading position at the end of a displacement of the infusion body (37) from the discharge position to the loading position.

10. A brewing apparatus as claimed in Claim 9, wherein the guide means (28) are movable to and from an operative position, in which the guide means (28) cooperate with the fixed frame (2) to define a track (34) extending radially in relation to the fixed axis (7); the extraction piston (45) having a cam follower (47) adapted to engage the radial track (34) when the extraction piston (45) moves towards a bottom of the infusion chamber (40).

11. A brewing apparatus as claimed in Claim 10, and comprising a cam control device provided in a fixed position on the frame (2) and defined by a window (20) provided through the frame (2), engaged by the cam follower (47) and comprising an arm (21), which extends radially in relation to the fixed axis (7) and is engageable with transverse play by the cam follower (47); the guide means (28) covering partially, in the operative position, said arm (21) to define said track (34) along the arm (21).

12. A brewing apparatus as claimed in Claim 10 or 11, wherein the guide means (28) comprise a plate (28) mounted on the frame (2) to oscillate about an axis (31) parallel to the fixed axis (7).

## Patentansprüche

1. Brühvorrichtung für Automaten zur Herstellung von Brühgetränken; wobei die Brühvorrichtung (1) eine feststehende Achse (7) aufweist und umfasst:
einen feststehenden Rahmen (2); einen Umkehrantrieb (87); eine Anzahl beweglicher, angetriebener Elemente, umfassend einen Aufgusskörper (37),
der eine Aufgusskammer (40) bestimmt und angepasst ist, um die feststehende Achse (7) zu schwingen, über eine Beschickungsposition für ein zu brühendes Material, und zwischen einer Aufgussposition und einer Abgabeposition, die auf gegenüberliegenden Seiten der Beschickungsposition angeordnet sind; einen Extraktionskolben (45), der sich entlang der Aufgusskammer (40) hin und her bewegt, um in der Abgabeposition einen Pellet (91) aus gebrühtem Material aus der Aufgusskammer (40) durch eine Stirnfläche (42) des Aufgusskörpers (37) auszuwerfen; und ein Abschabemittel (60), das auf dem Rahmen (2) in einer Position gegenüber der Stirnfläche (42) montiert ist, um den ausgeworfenen Pellet (91) abzugeben; wobei die Brühvorrichtung (1) **dadurch gekennzeichnet ist, dass** das Abschabemittel (60) einen Abgabeschaber (65) umfasst, der zwischen der Beschickungs- und Abgabeposition angeordnet ist,
und Nachlaufmittel (67), die zwischen dem Abgabeschaber (65) und der Stirnfläche (42) des Aufgusskörpers (37) angeordnet und betriebsfähig sind, um, ausgehend von einer normalen angehobenen Position, in der die Nachlaufmittel (67) ermöglichen, dass der Abgabeschaber (65) sich selbst in Kontakt mit der Stirnfläche (42) des Aufgusskörpers (37) hält, in einer abgesenkten Position angeordnet zu werden, um den Abgabeschaber (65) in einem Abstand von der Stirnfläche (42) zu halten.

2. Brühvorrichtung nach Anspruch 1, weiterhin umfassend einen Verdichtungskolben (51), der in der Aufgussposition angeordnet ist und zu und von einer Eingriffsposition mit der Aufgusskammer (40) beweglich ist, um das zu brühende Material, in der Aufgusskammer (40) zu verdichten.

3. Brühvorrichtung nach Anspruch 1 oder 2, wobei das Abschabemittel (60) einen ersten und einen zweiten Arm (62, 64) umfasst, die fest mit den jeweiligen Enden des Abgabeschabers (65) verbunden sind, sich von dem Abgabeschaber (65) zu der Aufgussposition hin erstrecken und an dem Rahmen (2) montiert sind, um in Bezug auf den Rahmen (2) um eine zweite Achse (61) zu schwingen, die sowohl parallel zum Abgabeschaber (65) als auch zu einer ersten Achse ist, die mit der feststehenden Achse (7) übereinstimmt; wobei die Nachlaufmittel (67) von dem zweiten Arm (64) getragen werden.

4. Brühvorrichtung nach einem der vorhergehenden Ansprüche, wobei die Nachlaufmittel (67) einen Hebel (69) umfassen, der, in Bezug auf den Abgabeschaber (65), zum Schwingen um eine Schwingachse montiert ist, der mit dem Abgabeschaber (65) und parallel zu der feststehenden Achse (7) beweglich ist, aus einer normalen angehobenen Position, in der ein freies Ende des Hebels (69) auf einer höheren Ebene als das des Abgabeschabers (65) positioniert ist, bis zu einer abgesenkten Position, in der das freie Ende in Bezug auf den Abgabeschaber (65) zu der feststehenden Achse (7) hin hervorsteht.

5. Brühvorrichtung nach einem der vorhergehenden Ansprüche, umfassend Auslösemittel (71, 72), die angepasst sind, mit den Nachlaufmitteln (67) zusammenzuwirken, um die Nachlaufmittel (67) in die abgesenkte Position zu bewegen, wenn sich der Aufgusskörper (37), bei Verwendung, von der Aufgussposition in die Abgabeposition über die Beschickungsposition bewegt.

6. Brühvorrichtung nach Anspruch 5, wobei die Auslösemittel (71, 72) von dem Aufgusskörper (37) getragen werden.

7. Brühvorrichtung nach Anspruch 5 oder 6, wobei der Aufgusskörper (37) eine Zunge (39a) aufweist, die sich zu der Abgabeposition hin erstreckt, zur Stirnfläche (42) hin abgerundet ist und unter dem Abschabemittel (60) beweglich ist; wobei die Auslösemittel (71,72) auf der Zunge (39a) vorgesehen sind.

8. Brühvorrichtung nach Anspruch 6 oder 7, wobei die Auslösemittel (71, 72) eine Schulter (72) umfassen, die auf der Zunge (39a) parallel zu der feststehenden Achse (7) vorgesehen ist, zum Einhaken der Nachlaufmittel (67), wenn sich die Nachlaufmittel (67), bei Verwendung, entlang der Zunge (39a) und zu der Stirnfläche (42) des Aufgusskörpers (37) hin bewegen.

9. Brühvorrichtung nach einem der vorhergehenden Ansprüche, umfassend Führungsmittel (28), die angepasst sind, mit dem Aufgusskörper (37) zusammenzuwirken, um den Aufgusskörper (37) fest in der Beschickungsposition am Ende einer Verlagerung des Aufgusskörpers (37) von der Abgabeposition in die Beschickungsposition zu halten.

10. Brühvorrichtung nach Anspruch 9, wobei die Führungsmittel (28) zu und von einer betriebsfähigen Position beweglich sind, in der die Führungsmittel (28) mit dem feststehenden Rahmen (2) zusammenwirken, um eine Bahn (34) zu bestimmen, die sich in Bezug auf die feststehende Achse (7) radial erstreckt; wobei der Extraktionskolben (45) eine Kurvenrolle (47) aufweist, die angepasst ist, in die radiale Bahn (34) einzugreifen, wenn sich der Extraktionskolben (45) zu einem Boden der Aufgusskammer (40) hin bewegt.

11. Brühvorrichtung nach Anspruch 10, umfassend eine Nockensteuervorrichtung, die in einer festen Position am Rahmen (2) vorgesehen ist und von einem Fenster (20) bestimmt ist, das durch den Rahmen (2) vorgesehen ist, die durch die Kurvenrolle (47) in Eingriff gebracht wird und einen Arm (21) umfasst, der sich in Bezug auf die feststehende Achse (7) radial erstreckt und mit quergerichtetem Spiel durch die Kurvenrolle (47) in Eingriff bringen lässt; wobei die Führungsmittel (28) den Arm (21), in der betriebsfähigen Position teilweise bedecken, sodass der Arm (21) die Bahn (34) entlang dem Arm (21) festlegt.

12. Brühvorrichtung nach Anspruch 10 oder 11, wobei die Führungsmittel (28) eine Platte (28) umfassen, die auf dem Rahmen (2) montiert ist, um um eine Achse (31) parallel zu der feststehenden Achse (7) zu schwingen.

## Revendications

1. Appareil d'infusion ou brassage pour machines automatiques pour la production de boissons infusées ou brassées ; l'appareil d'infusion ou brassage (1) ayant un axe fixe (7) et comprenant un bâti fixe (2) ; un entraînement réversible (87) ; un certain nombre d'éléments entraînés mobiles comprenant un corps d'infusion (37) définissant une chambre d'infusion (40) et adapté pour osciller autour de l'axe fixe (7) via une position de chargement pour une matière à brasser et entre une position d'infusion et une position de refoulement agencées sur des côtés opposés de la position de chargement ; un piston d'extraction (45) en mouvement de va-et-vient le long de la chambre d'infusion (40) pour expulser, en position de refoulement, un gâteau (91) de matière brassée en provenance de la chambre d'infusion (40) via une surface d'extrémité (42) du corps d'infusion (37) ; un moyen de racle (60) monté sur le bâti (2) dans une position faisant face à la surface d'extrémité (42) pour refouler le gâteau expulsé (91) ; l'appareil d'infusion ou brassage (1) étant **caractérisé en ce que** le moyen de racle (60) comprend une racle de refoulement (65) agencée entre les positions de charge et de refoulement, et un moyen suiveur (67) agencé entre la racle de refoulement (65) et la surface d'extrémité (42) du corps d'infusion (37) et pouvant s'agencer, en partant d'une position levée normale dans laquelle le moyen suiveur (67) permet à la racle de refoulement (65) de se maintenir en contact avec la surface d'extrémité (42) du corps d'infusion (37) dans une position abaissée pour maintenir la racle de refoulement (65) à une distance de ladite surface d'extrémité (42).

2. Appareil d'infusion ou brassage selon la revendication 1, et comprenant en outre un piston de compression (51) agencé dans la position d'infusion et déplaçable à partir de et en direction d'une position de mise en prise avec la chambre d'infusion (40) pour comprimer la matière à brasser dans la chambre d' infusion (40).

3. Appareil d'infusion ou brassage selon la revendication 1 ou 2, dans lequel le moyen de racle (60) comprend un premier et un second bras (62, 64), qui sont raccordés de façon rigide à des extrémités respectives de la racle de refoulement (65), s'étendent de la racle de refoulement (65) vers la position d'infusion et sont montés sur le bâti (2) pour osciller, en relation avec le bâti (2), autour d'un second axe (61) qui est parallèle à la fois à la racle de refoulement (65) et à un premier axe coïncidant avec l'axe fixe (7) ; le moyen suiveur (67) étant porté par le second bras (64).

4. Appareil d'infusion ou brassage selon l'une quelconque des revendications précédentes, dans lequel le moyen suiveur (67) comprend un levier (69) monté pour osciller, en relation avec la racle de refoulement (65), autour d'un axe d'oscillation déplaçable avec la racle de refoulement (65) et parallèle à l'axe fixe (7), à partir d'une position levée normale, dans laquelle une extrémité libre du levier (69) est positionnée à un niveau plus haut que celui de la racle de refoulement (65), à une position abaissée, dans laquelle ladite extrémité libre fait saillie, en relation avec la racle de refoulement (65), vers l'axe fixe (7).

5. Appareil d'infusion ou brassage selon l'une quelconque des revendications précédentes, et comprenant des moyens de déclenchement (71, 72) adaptés pour coopérer avec le moyen suiveur (67) pour déplacer le moyen suiveur (67) en la position abaissée quand le corps d'infusion (37) se déplace, en utilisation, de la position d'infusion à la position de refoulement en passant par la position de charge.

6. Appareil d'infusion ou brassage selon la revendication 5, dans lequel les moyens de déclenchement (71, 72) sont portés par le corps d'infusion (37).

7. Appareil d'infusion ou de brassage selon la revendication 5 ou 6, dans lequel le corps d'infusion (37) a une languette (39a) s'étendant vers la position de refoulement, arrondie vers la surface d'extrémité (42) et déplaçable sous le moyen de racle (60) ; les moyens de déclenchement (71, 72) étant disposés sur ladite languette (39a).

8. Appareil d'infusion ou brassage selon la revendication 6 ou 7, dans lequel les moyens de déclenchement (71, 72) comprennent un épaulement (72) disposé sur ladite languette (39a) parallèle à l'axe fixe (7) pour accrocher le moyen suiveur (67) quand le moyen suiveur (67) se déplace, en utilisation, le long de la languette (39a) et vers la surface d'extrémité (42) du corps d'infusion (37).

9. Appareil d'infusion ou brassage selon l'une quelconque des revendications précédentes, et comprenant des moyens de guidage (28) adaptés pour coopérer avec le corps d'infusion (37) pour maintenir le corps d'infusion (37) fixé dans la position de chargement à la fin d'un déplacement du corps d'infusion (37) allant de la position de refoulement à la position de chargement.

10. Appareil d'infusion ou brassage selon la revendication 9, dans lequel les moyens de guidage (28) sont déplaçables à partir de et en direction d'une position de fonctionnement, dans laquelle les moyens de guidage (28) coopèrent avec le bâti fixe (2) pour définir un chemin (34) s'étendant de façon radiale en relation avec l'axe fixe (7) ; le piston d'extraction (45) ayant un suiveur de came (47) adapté pour se mettre en prise avec le chemin radial (34) quand le piston d'extraction (45) se déplace vers un fond de la chambre d'infusion (40).

11. Appareil d'infusion ou brassage selon la revendication 10, et comprenant un dispositif de commande de came disposé dans une position fixe sur le bâti (2) et défini par une fenêtre (20) disposée à travers le bâti (2), en prise avec le suiveur de came (47) et comprenant un bras (21), qui s'étend radialement en relation à l'axe fixe (7) et peut être mis en prise avec jeu transversal par le suiveur de came (47) ; les moyens de guidage (28) couvrant partiellement, en position de fonctionnement, ledit bras (21) pour définir ledit chemin (34) le long du bras (21).

12. Appareil d'infusion ou brassage selon la revendication 10 ou 11, dans lequel les moyens de guidage (28) comprennent une plaque (28) montée sur le bâti (2) pour osciller autour d'un axe (31) parallèle à l'axe fixe (7).
